**Europäisches Patentamt**

**European Patent Office**

**Office européen des brevets**

(11) Veröffentlichungsnummer : **0 384 219 B1**

(12) # EUROPÄISCHE PATENTSCHRIFT

(45) Veröffentlichungstag der Patentschrift :
**28.10.92 Patentblatt 92/44**

(51) Int. Cl.$^5$ : **E05F 15/16, E05F 11/48**

(21) Anmeldenummer : **90102390.3**

(22) Anmeldetag : **07.02.90**

(54) **Antriebsteil für einen Bowdenzug-Fensterheber.**

(30) Priorität : **23.02.89 DE 3905589**

(43) Veröffentlichungstag der Anmeldung :
**29.08.90 Patentblatt 90/35**

(45) Bekanntmachung des Hinweises auf die
Patenterteilung :
**28.10.92 Patentblatt 92/44**

(84) Benannte Vertragsstaaten :
**DE ES FR GB**

(56) Entgegenhaltungen :
**EP-A- 0 175 996**
**DE-A- 3 519 056**
**DE-U- 8 138 613**

(73) Patentinhaber : **KÜSTER & Co. GmbH**
**Postfach 1157**
**W-6332 Ehringshausen (DE)**

(72) Erfinder : **Roth, Wolfgang**
**Schillberg Strasse 12**
**W-6334 Asslar-Oberlemp (DE)**
Erfinder : **Medebach, Thomas**
**Sudentenstrasse 17**
**W-6330 Wetzlar 17 (DE)**

(74) Vertreter : **Müller, Eckhard, Dr.**
**Eifelstrasse 14**
**W-6257 Hünfelden 2 (DE)**

**Beschreibung**

Die Erfindung betrifft ein elektromotorisches Antriebsteil für einen Bowdenzugfensterheber nach dem Oberbegriff des Anspruches 1.

Die Erfindung geht aus von einem Stand der Technik, wie er in der DE-PS 35 19 056 dokumentiert ist.

Der Erfindung liegt die Aufgabe zugrunde, die für ein solches Antriebsteil erforderlichen Einzelteile weiter zu verringern und damit vor allem eine geringere Bauhöhe des Antriebsteiles zu erzielen. Damit geht parallel die Aufgabe, eine preisgünstigere Herstellung eines solchen Bowdenzugfensterhebers bzw. seines Antriebsteiles sowohl in der Bereitstellung der Einzelteile als auch in der Montage zu ermöglichen.

Diese Aufgabe ist durch ein Antriebsteil gelöst, welches die in Anspruch 1 angegebenen Merkmale aufweist.

Dadurch, daß die am Schneckenrad angeformte Buchse direkt bis zur anderen Gehäusewand vorgezogen und die Seiltrommel unmittelbar auf dieser Buchse gelagert ist, werden gegenüber der Antriebseinheit nach dem Stand der Technik mindestens zwei Einzelteile eingespart, so daß die Antriebseinheit insgesamt einfacher aufgebaut ist.

In einer bevorzugten Ausführungsform ist die vorgezogene Buchse an ihrem äußeren Ende mit axialen Schlitzen versehen, so daß Zungen entstehen, an denen nach außen vorspringende Haken angeformt sind. Mit diesen Haken greift die Buchse durch ein Loch in der Gehäusewand dieser Teileinheit, so daß das Schneckenrad und die Seiltrommel gegen Herausziehen gesichert sind.

In der Zeichnung ist die Erfindung in einem Ausführungsbeispiel dargestellt. Es zeigen:

Fig. 1 die aus einer ersten und einer zweiten Teileinheit aufgebaute Antriebseinheit im Querschnitt,

Fig. 2 die erste Teileinheit im Querschnitt gemäß Fig.1,

Fig. 3 die zweite Teileinheit im Querschnitt gemäß Fig.1,

Fig. 4 die Antriebseinheit in Seitenansicht in Richtung A der Fig .1.

In den Figuren ist mit 1 die erste Teileinheit und mit 2 die zweite Teileinheit bezeichnet. Die erste Teileinheit besteht aus einem Gehäuse 3, in das zentrisch ein Lagerbolzen 4 eingesetzt ist. An dieser Teileinheit ist der Elektromotor 5 befestigt, dessen Schnecke 5a in das Gehäuse hineinragt.

Die zweite Teileinheit 2 besteht aus einer Gehäuseschale 6, die in Höhe des Bolzens 4 ein Loch 2a besitzt. In dieser Teileinheit ist das Schneckenrad 7 untergebracht, das eine vorgezogene Buchse 7a besitzt. Auf dieser Buchse 7a ist die Seiltrommel 8 direkt gelagert. Schneckenrad und Seiltrommel sind in bekannter Weise über vom Schneckenrad 7 vorspringende Lappen und zwischengefügte Gummipuffer 10 auf Mitnahme verbunden.

Am äußeren Ende der Buchse 7a sind Haken 7b angeformt, die im zusammengesetzten Zustand der beiden Teileinheiten durch das Loch 2a greifen und das Schneckenrad und die Seiltrommel gegen Herausziehen sichern.

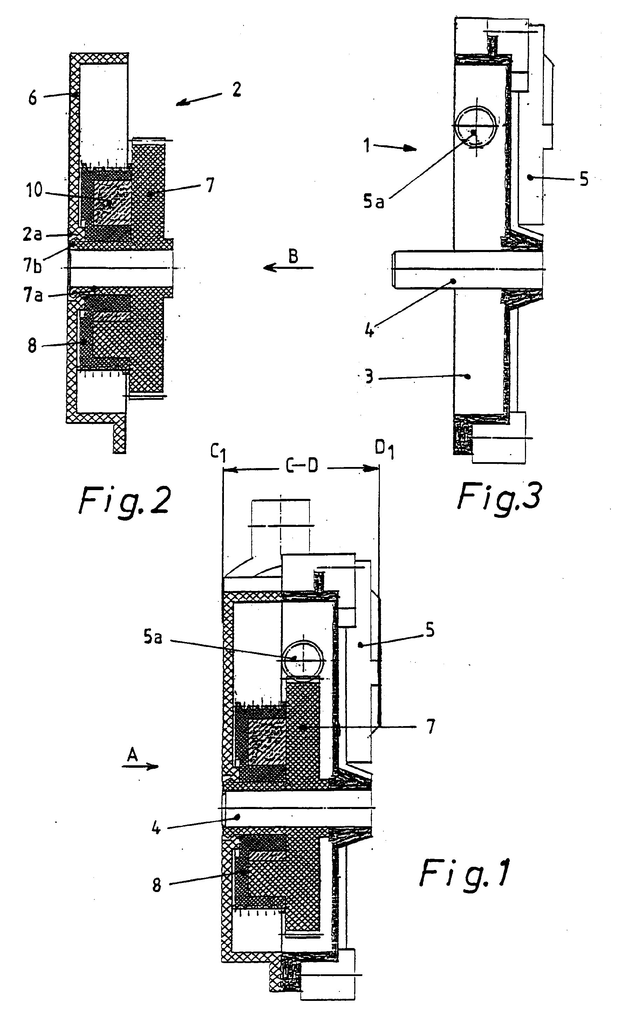

In bekannter Weise wird die Antriebseinheit dadurch montiert, daß die erste und die zweite Teileinheit in Pfeilrichtung B zusammengefügt werden und in dieser Stellung z.B. durch Schrauben in den vorstehenden Flanschen zusammengehalten werden (Fig.1).

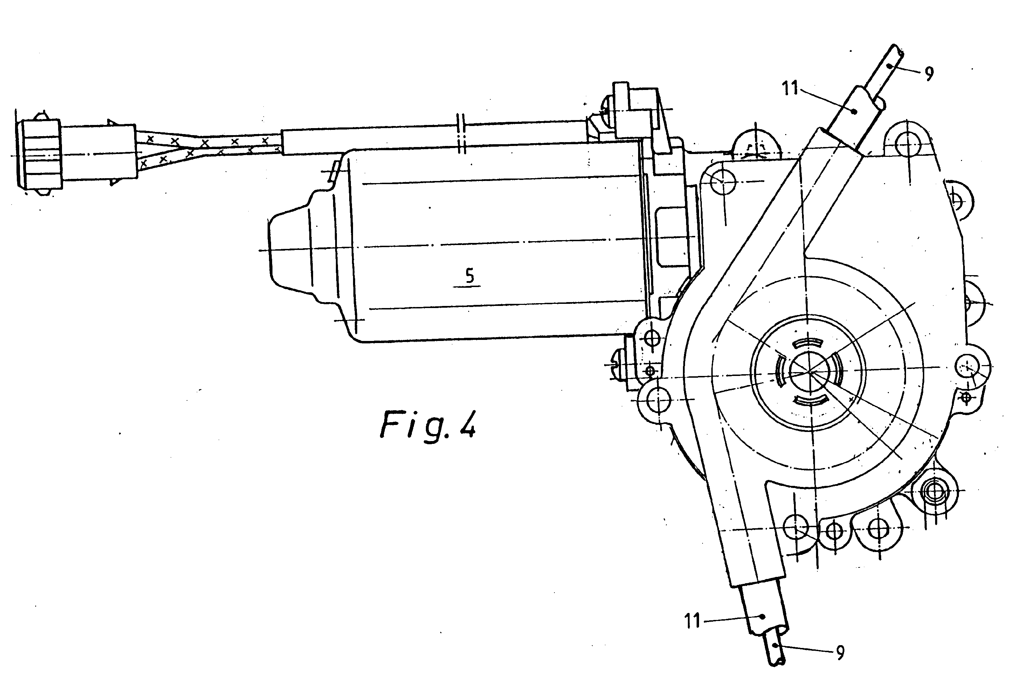

An der zweiten Teileinheit 2 sind die Abgänge für das Seil 9 angeformt, wie aus Fig.4 erkennbar. An diesen Abgängen stützen sich in bekannter Weise auch die Bowdenzugschläuche 11 ab.

Die Lösung der zugrunde liegenden Aufgabe ist insbesondere aus Fig.1 zu erkennen, nämlich die Verringerung der Bauhöhe des Antriebsteiles. Diese Bauhöhe ist durch das Maß C-D verdeutlicht. Dieses Maß beträgt bei der bevorzugten Ausführungsform ca. 38 mm und liegt damit um ca. 4 bis 5 mm niedriger als bei den Antriebsteilen nach dem Stand der Technik. Dabei sei besonders darauf hingewiesen, daß die Einsparung an der Kante $C_1$ erfolgt. Die Kante $D_1$ ist durch die Form des angesetzten Elektromotors gegeben, Aus diesem tritt in vorgegebenem Abstand die Schnecke 5 heraus, an dessen Lage die Mittenachse des Schneckenrades 7 gebunden ist. Wenn eine Einsparung an Bauhöhe angestrebt wird, so ist diese naturgemäß nur an der Kante $C_1$ möglich. Hier greift die erfindungsgemäße Einsparung der Einzelteile Platz und bewirkt die Herabsetzung der Bauhöhe.

Daß eine solche verminderte Bauhöhe auch dann von erheblicher praktischer Bedeutung ist, wenn sie nur vier oder fünf Millimeter beträgt, wird verständlich, wenn man bedenkt, daß der Fensterheber mit seinem Antriebsteil in einer Automobiltür zwischen der Außenhaut und der Innenwand untergebracht werden muß, d.h. also in einem Raum, in dem zunehmend mehr Bauteile angeordnet werden, wie z.B. Lautsprecher, rundumverriegelungsfähige Türschlösser und dgl.

**Patentansprüche**

1.) Elektromotorisches Antriebsteil für einen ein Seil, Bowdenzugschläuche und eine zwischen diesen gehaltene Führungsschiene umfassenden Bowdenzug-Fensterheber für Automobile und ähnliche Fahrzeuge, mit einem aus zwei separaten Teileinheiten aufgebauten Gesamt-Gehäuse, in dem ein von einem Motor angetriebenes Schneckenrad und eine von diesem mitgenommene Seiltrommel auf einem Lagerbolzen gelagert sind, <u>dadurch gekennzeichnet,</u> daß die erste Teileinheit (1) des Gehäuses die Motorschnecke (5a) und den Lagerbolzen (4) enthält und mit dem Elektromotor-Gehäuse (5) fest verbunden bzw. einstückig ist,

daß die zweite Teileinheit (2) des Gehäuses das Schneckenrad (7) und die mit diesem auf Mitnahme verbundene Seiltrommel (8) enthält und an dieser Teileinheit die Bowdenzugschläuche (10) abgestützt sind, und

daß an das Schneckenrad (7) zentrisch eine Buchse (7a) angeformt ist, auf der die Seiltrommel (8) gelagert ist.

2.) Antriebsteil nach Anspruch 1, dadurch gekennzeichnet, daß die zweite Teileinheit (2) ein Loch (2a) besitzt, in das die Buchse (7a) mit ihrem äußeren Ende hineinragt und gelagert ist.

3.) Antriebsteil nach den Ansprüchen 1 und 2, dadurch gekennzeichnet, daß die Buchse (7a) an ihrem äußeren Ende zwecks Bildung von Zungen in axialer Richtung geschlitzt ist, und an den Zungen nach außen vorstehende Haken angeformt sind, welche durch das Gehäuseloch (2a) hindurch und dieses hintergreifen und in dieser Weise das Schneckenrad (7) mit Seiltrommel (8) gegen Herausziehen sichern.

## Claims

1. Electric-motorised drive member for a Bowden cable window lifter, which comprises a cable, Bowden cable casings and a guide rail held between these, for automobiles and similar vehicles, with an overall housing which is constructed from two separate partial units and in which a worm wheel driven by a motor and a cable drum entrained by the wheel are mounted on a bearing pin, characterised thereby that the first partial unit (1) of the housing contains the motor worm (5a) and the bearing pin (4) and is fixedly connected or integral with the electric motor housing (5), that the second partial unit (2) of the housing contains the worm wheel (7) and the cable drum (8) entrainingly connected therewith and the Bowden cable casings (10) are supported at this partial unit, and that a bush (7a), on which the cable drum (8) is mounted, is shaped on centrally at the worm wheel (7).

2. Drive member according to claim 1, characterised thereby that the second partial unit (2) possesses a hole (2a), in which the bush (7a) projects by its outer end and is mounted.

3. Drive member according to claims 1 and 2, characterised thereby that the bush (7a) is slotted in axial direction at its outer end for the purpose of forming tongues, and shaped on at the tongues are outwardly projecting hooks which pass through and engage behind the housing hole (2a) and in this manner secure the worm wheel (7) with the cable drum (8) against removal.

## Revendications

1. Elément de commande à moteur électrique pour un lève-glace à câble Bowden, comprenant un câble, une gaine souple et un rail de guidage maintenu entre ceux-ci, et destiné à des automobiles ou véhicules similaires, un boîtier composé de deux parties séparées et dans lequel sont montés sur un axe une roue creuse entraînée un moteur et un tambour d'enroulement entraîné par celle-ci, caractérisé en ce que,

la première partie (1) du boîtier qui comprend la vis sans fin (5a) et l'axe (4) est fermement fixée au flasque du moteur électrique ou forme ce flasque, en ce que la seconde partie (2) du boîtier comprend la roue creuse (7) et le tambour d'enroulement (8) qui est assemblé à celle-ci et en ce que les gaines souples de câble Bowden (10) sont en appui contre cette partie, et

en ce qu'une douille (7a), sur laquelle est monté le tambour d'enroulement (8) est prévue au centre au niveau de la roue (7).

2. Elément de commande selon la revendication 1, caractérisé en ce que la seconde partie (2) comporte un trou (2a) dans lequel pénètre la douille (7a) par son extrémité extérieure afin d'y être logée.

3. Elément de commande selon les revendications 1 et 2, caractérisé en ce que la douille (7a) est fendue à son extrémité extérieure pour former des languettes axiales, en ce que des crochets sont réalisés en saillie vers l'extérieur sur les languettes et en ce que ces crochets pénètrent dans le trou (2a) du boîtier et restent en prise avec celui-ci par derrière et assurent de cette manière la retenue de la roue (7) et du tambour d'enroulement (8).

*Fig.2*

*Fig.3*

*Fig.1*

Fig. 4